# EUROPÄISCHE PATENTSCHRIFT

(11) **EP 0 491 220 B1**
(45) Veröffentlichungstag und Bekanntmachung des Hinweises auf die Patenterteilung: **22.02.1995**
(21) Anmeldenummer: 91120716.5
(22) Anmeldetag: 03.12.1991
(51) Int. Cl.: B23H 3/02, B23H 7/20

(54) **Verfahren zur Regelung des elektrischen Stromes bei einem elektrochemischen Bearbeitungsprozess**
Electric current control method used for electrochemical machining
Méthode de réglage du courant électrique durant un usinage électro-chimique

(30) Priorität: 19.12.1990 DE 4040590
(43) Veröffentlichungstag der Anmeldung: 24.06.1992
(73) Patentinhaber: Frembgen, Herbert, D-87700 Memmingen (DE)
(72) Erfinder: Frembgen, Herbert, D-87700 Memmingen (DE)
(74) Vertreter: Hübner, Hans-Joachim, Dipl.-Ing.

(56) Entgegenhaltungen:
- EP-A- 0 324 142
- DE-A- 2 030 658
- GB-A- 2 202 177
- SOVIET INVENTIONS ILLUSTRATED Section Ch, Week 8243, Derwent Publications Ltd.,London, GB; Class M, AN 82-92067 & SU-A-891 311 (ATROSHCHEN ET AL).

## Beschreibung

Die Erfindung betrifft ein Verfahren nach dem Einleitungsteil von Patentanspruch 1.

Ein derartiges Verfahren ist aus der US-A-4,457,995 bekannt. Kennzeichnend für dieses Verfahren sind die stationär gehaltenen Elektroden, d.h. während des Bearbeitungsprozesses wird weder das Werkzeug noch das Werkstück bewegt. Der Arbeitsspalt vergrößert sich also während des Bearbeitungsprozesses ständig. Als physikalische Größen für das Speicherprogramm werden entweder der Arbeitsstrom oder der Widerstand am Arbeitsspalt verwendet. Der Arbeitsstrom wird nun so geregelt, daß er während des Bearbeitungsprozesses leicht abnimmt oder in einer alternativen Ausführung nahezu konstant bleibt. Bei der zweiten Alternative verringert sich die Bearbeitungszeit.

Bei einer anderen Art von elektrochemischen Bearbeitungsprozessen wird das Werkzeug während des Bearbeitungsprozesses ständig bewegt, um die Breite des Arbeitsspaltes konstant zu halten. Dabei taucht das Werkzeug zunehmend in das Werkstück ein, womit sich die Arbeitsfläche vergrößert. Die Stromstärke im Arbeitsspalt muß dann ständig vergrößert werden, um die Stromdichte konstant zu halten. Verfahren dieser Art sind in der DE-A-2030658,SU-A-891311, EP-A-0324142, GB-A-2202177 beschrieben.

Da die Materialabtragmenge pro Zeiteinheit direkt proportional der Stärke des Arbeitsstromes ist, liegt es auf der Hand, mit hoher Stromstärke zu arbeiten. Die vom Elektrolyten abzuführende Wärme ist der elektrischen Leistung proportional, diese wiederum ist bei hohen Arbeitsströmen entsprechend hoch. Der Elektrolyt darf aber nirgendwo, auch nicht lokal überhitzt werden. Beim eingangs genannten Verfahren, bei dem sich der Arbeitsspalt während des Arbeitsprozesses vergrößert,erhöht sich wegen des zunehmenden Widerstandes auch die Spaltspannung. Da der Arbeitsstrom entsprechend leicht absinkt, bleibt die Leistung während des Arbeitsprozesses im wesentlichen konstant. Bei dem an zweiter Stelle genannten bekannten Verfahren, bei dem der Arbeitsspalt konstant bleibt, kann die Stromstärke während des Bearbeitungsprozesses erhöht werden, weil sich die Arbeitsfläche vergrößert. Entsprechend nimmt auch das die Arbeitsfläche beaufschlagende Elektrolytvolumen zu, sodaß die größere Leistung auch abgeführt werden kann. Die Erhöhung der Stromstärke kompensiert aber gerade nur die größer werdende Arbeitsfläche, sodaß die Stromdichte während des Arbeitsprozesses nicht erhöht wird.

Aufgabe der Erfindung ist es, ein Stromregelungsverfahren der eingangs genannten Art dahingehend weiter auszubilden, daß die Arbeitszeit verkürzt wird, ohne eine unzulässige Temperaturerhöhung des Elektrolyten zu erhalten.

Diese Aufgabe wird bei einem Verfahren mit den Merkmalen des Einleitungsteils von Patentanspruch 1 durch dessen Kennzeichnungsmerkmale gelöst.

Zwar steigt mit der erfindungsgemäßen Stromdichteerhöhung die elektrische Leistung im Arbeitsspalt progressiv an, dennoch ist aber überraschenderweise damit kein unzulässiger Temperaturanstieg des Elektrolyten verbunden, weil offenbar der Volumenstrom des Elektrolyten nicht exakt linear mit sich vergrößernder Spaltbreite zunimmt, sondern es liegt eher eine progressive Abhängigkeit vor, die auf der Verringerung des Drosseleffektes 2 basieren dürfte. Versuche haben gezeigt, daß überraschenderweise die erfindungsgemäße Stromdichteerhöhung nicht zu einer merklichen Temperaturerhöhung des Elektrolyten führt, andererseits wird eine erhebliche Zeitersparnis beim Bearbeitungsprozess erreicht, was sich bei Serienbearbeitung wirtschaftlich günstig auswirkt.

Die Art der Stromdichteerhöhung während des Bearbeitungsprozesses kann im einfachsten Fall linear verlaufen. Dies ist aber keinesfalls zwingend.

Anhand der Zeichnung wird die Erfindung beispielsweise näher beschrieben.

Es zeigt
- FIG. 1: eine Schnittansicht einer Vorrichtung zum elektrochemischen Entgraten eines Werkstückes,
- FIG. 2: eine Schnittansicht mit Darstellung des Arbeitsspaltes zwischen Werkzeug und Werkstück zu Beginn des elektrochemischen Rundungsvorganges,
- FIG. 3: eine Schnittdarstellung ähnlich FIG. 2, jedoch nach erfolgter Bearbeitung des Werkstückes,
- FIG. 4: ein Diagramm mit Darstellung einiger sich während des Bearbeitungsvorganges verändernder Größen des Elektrolyten, des Arbeitsspaltes und der elektrischen Größen sowohl gemäß der Erfindung als auch gemäß dem Stand der Technik, und
- FIG. 5: ein Blockdiagramm zur Erläuterung des Regelverfahrens gemäß der Erfindung.

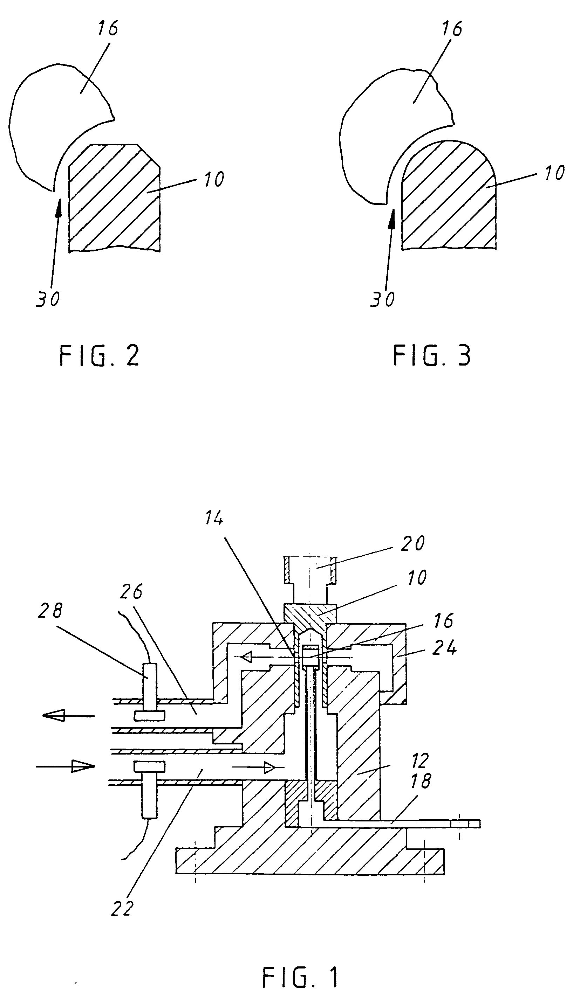

Die in FIG. 1 gezeigte Vorrichtung dient zum Entgraten eines Werkstücks 10, das von oben in einen Werkstückhalter 12 eingesetzt ist und eine Querbohrung 14 aufweist, die innen zu entgraten ist. In das Innere des Werkstückes 10 ragt das Werkzeug 16 hinein, das mit einer der Querbohrung 14 benachbarten Ringelektrode 16 ausgestattet ist. Das Werkzeug 16 ist mit einem Stromanschluß 18 versehen und als Kathode an eine Gleichstromquelle angeschlossen. Auf das Werkstück 10 wird ein gefederter Anodenkontakt 20 gesetzt, der ebenfalls an die Gleichstromquelle angeschlossen ist. Elektrolytflüssigkeit strömt durch eine Einlaßleitung 22 in das Innere des Werkstückhalters 12, durchströmt den Arbeitsspalt zwischen der Ringelektrode des Werkzeuges 16 und dem Werkstück 10 und tritt durch die Querbohrungen 14 im Werkstück 10 in einen Auslaßkanal 26, der zwischen einem als Spritzschutz wirkenden Topf 24 und dem Werkstückhalter 12 ausgebildet ist. Im Auslaßkanal 26 ist ein Sensor 28 angeordnet, der eine physikalische Größe der Elektrolytlösung mißt.

Die Figuren 2 und 3 zeigen vereinfacht den zwischen Werkzeug 16 und Werkstück 10 gebildeten Arbeitsspalt 30. Das Werkzeug 16 dient hier zur Kantenrundung des Werkstückes. FIG. 2 zeigt die Form des Werkstückes und den Arbeitsspalt 30 zu Beginn des Abtragprozesses. FIG. 3 zeigt die Verhältnisse am Ende des Bearbeitungsvorganges. Da sich der Arbeitsspalt 30 von z.B. 0,3mm auf etwa 0,5mm verbreitert, verändern sich auch die physikalischen Werte des Elektrolyten am Sensor 28, der z.B. als Temperatursensor, als Drucksensor oder als Durchflußmengensensor ausgebildet sein kann.

Angenommen, es handelt sich beim Sensor 28 um einen Temperaturfühler, so würde dieser bei konstanter Energieaufnahme des Elektrolyten im Arbeitsspalt aufgrund des zwischen den Elektroden fließenden Stromes eine Temperaturabsenkung erfahren, wenn die vom nicht dargestellten Kühler vorgegebene Eintrittstemperatur konstant ist. Dies beruht auf der maßgeblichen Reduzierung des Drosseleffektes während der Spalterweiterung. Bei einer Konstantstromregelung steigt die Spannung zwischen den Elektroden am Arbeitsspalt 30 an,sodaß auch die vom Elektrolyten abzuführende Wärmemenge entsprechend ansteigt. Dennoch überwiegt der Einfluß der Durchflußmengenzunahme aufgrund der Spalterweiterung, sodaß insgesamt immer noch ein Temperaturabfall am Sensor 28 gemessen wird. Wird nun laufend die Spannung am Arbeitsspalt 30 geringfügig über die für eine Stromkonstanz geltenden Werte erhöht, so steigt auch die Stromstärke mit der Spalterweiterung an und diese zusätzliche Spannungserhöhung läßt sich nun sehr einfach in Abhängigkeit von der Austrittstemperatur des Elektrolyten derart regeln, daß diese Austrittstemperatur konstant bleibt oder sich mit der Bearbeitungszeit längs einer Sollkurve ändert. Wesentlich ist dabei, daß die Stromstärke kontinuierlich oder feinstufig während der Bearbeitungszeit erhöht wird, sodaß die für den Abtragungsprozeß notwendige Gesamtstrommenge in kürzerer Zeit zwischen den Elektroden wirkt als dies bei einer Konstantstromregelung der Fall wäre. Dadurch wird die Arbeitszeit reduziert.

Es versteht sich, daß anstelle des Temperaturfühlers auch ein Durchflußmengenmeßgerat im Elektrolyt-Leitungskreis verwendet werden kann. Dieser Sensor muß nicht notwendigerweise im Ausgangskanal 26 der Vorrichtung vorgesehen sein. Da der Druckabfall mit zunehmender Breite des Arbeitsspaltes 30 geringer wird, erhöht sich die Durchflußmenge und dieser Wert wird zur Regelung der Spannungserhöhung am Arbeitsspalt verwendet, um die Stromstärke zu erhöhen. Da der Drosseleffekt im Arbeitsspalt 30 auch als Druckabfall gemessen werden kann, lassen sich entsprechend auch zwei Drucksensoren am Ausgang und am Eingang der Vorrichtung verwenden, um die gewünschte Regelgröße zu erhalten.

Schließlich versteht sich auch, daß der Abstand der beiden Elektroden in bekannter Weise induktiv oder auch kapazitiv gemessen werden kann, sodaß über diese Meßwerte die Spalterweiterung direkt festgestellt und als Meßwert in die Spannungsregelung eingeführt werden kann.

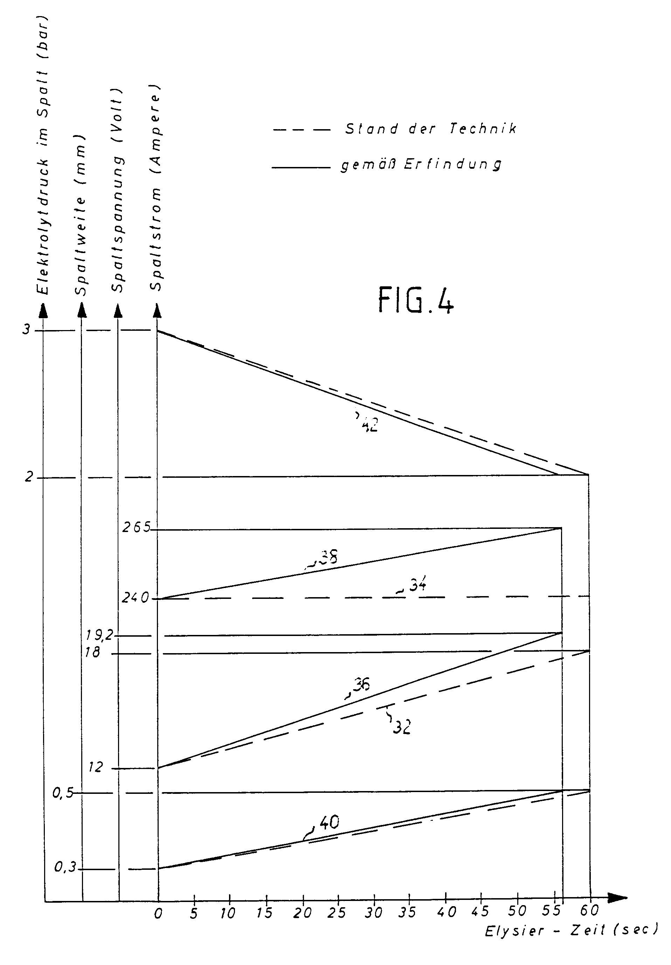

Die einfachste Lösung zur kontinuierlichen Erhöhung des Stromes zwischen den beiden Elektroden am Arbeitsspalt 30 erfolgt jedoch in Abhängigkeit von einer laufend gemessenen, zwischen diesen Elektroden herrschenden Arbeitsspannung. Wenn z.B. gemäß FIG. 4 zu Beginn des Arbeitsprozesses die Spannung am Arbeitsspalt 12 V beträgt und ein Strom von 240 A fließt, so ist eine ständige Spannungserhöhung erforderlich, um diesen Strom bei 240 A konstant zu halten. Der Spannungsverlauf 32 in FIG. 4 zeigt, daß nach einer Bearbeitungszeit von 60 Sek die Spannung den Wert von 18 V erreicht hat. Die zugehörige Stromstärke verläuft längs der waagerechten Linie 34 und beträgt nach wie vor 240 A. Da aber in praktisch allen Fällen einer elektrochemischen Bearbeitung aufgrund der Spalterweiterung eine mindestens 10%ige Strommengenerhöhung zulässig ist, erfährt die tatsächliche Arbeitsspannung laufend eine entsprechende Erhöhung. Der tatsächliche Verlauf der Arbeitsspannung ist durch die Kurve 36 dargestellt, die hier der Einfachheithalber linear veranschaulicht ist, was aber nicht zwingend ist, da auch ein progressiver oder ein degressiver Verlauf infrage kommt.Während des Arbeitszyklus wird bei diesem Spannungsverlauf eine laufende Erhöhung der Stromstärke erzielt. Dieser Stromstärkeverlauf ist durch die Kurve 38 repräsentiert, die gegenüber der Geraden 34 für die Konstantstromregelung ansteigend verläuft. Da also die Spannung am Ende des Arbeitszyklus um 10% bezogen auf die Anfangsspannung höher liegt als die Endspannung beim Konstantstromverfahren, nämlich 19,2 V statt 18 V beträgt, hat sich die Stromstärke ebenfalls um 10%, nämlich von 240 A auf ca. 265 A erhöht. Die mittlere Stromerhöhung beträgt demnach im Ausführungsbeispiel 5% und um diesen Wert reduziert sich die Bearbeitungszeit, die statt 60 Sek. nur noch 57 Sek. beträgt.

Wie sich aus den linken beiden Ordinaten von FIG. 4 ergibt, hat sich der Arbeitsspalt von 0,3mm auf 0,5mm erweitert (Kurve 40) und der Druck des Elektrolyten vor und hinter dem Spalt hat sich von 3 bar auf 2 bar reduziert (Kurve 42 in FIG. 4).

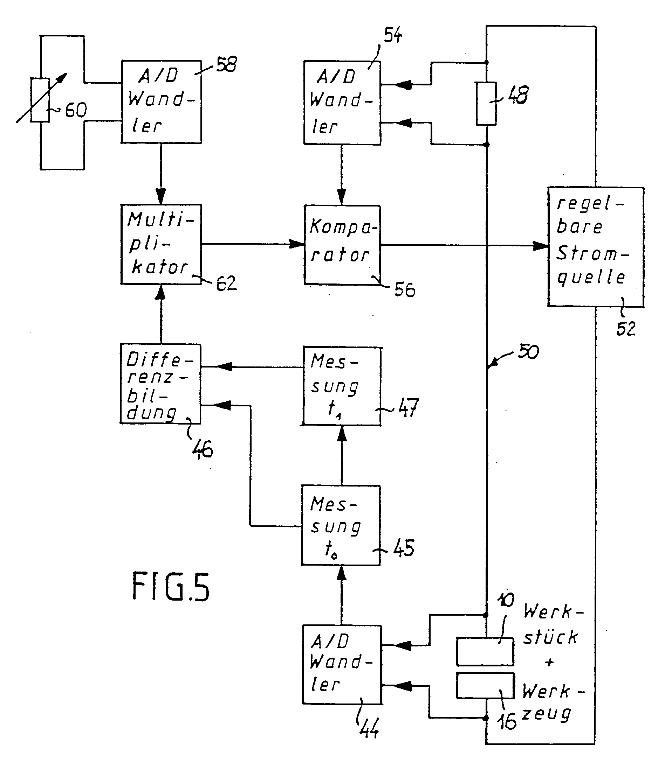

FIG. 5 erläutert das Blockschaltbild der Regeleinrichtung zur laufenden Erhöhung der Stromstärke während des Arbeitsprozesses in Abhängigkeit von der Messung der Spannung am Arbeitsspalt zwischen dem Werkstück 10 und dem Werkzeug 16. Die dort gemessene Spannung wird in einem A/D Wandler 44 digitalisiert. Die digitalisierten Werte werden in aufeinander folgenden Zeitpunkten t₀ und t₁ festgehalten und einem Differenzbildner 46 zugeführt. Wie beim herkömmlichen Konstantstrom-Regelverfahren wird der Spannungsabfall an einem Vorwiderstand 48 im Arbeitskreis 50 einer regelbaren Stromquelle 52 gemessen und in einem A/D Wandler 54 digitalisiert. Die digitalisierten Werte des Spannungsabfalls werden mit entsprechenden vorgegebenen Werten in einem Komparator 56 verglichen, dessen Ausgang die Stromquelle 52 ansteuert, um bei dem bekannten Verfahren die Spannung dieser Stromquelle laufend so zu erhöhen, daß in dem sich erweiterndem Arbeitsspalt der Strom konstant bleibt. Erfindungsgemäß werden nun die aus den Differenzbildner 46 gewonnenen Signale zusammen mit aus einem weiteren A/D Wandler 58 erzeugten Digitalwerten, die über ein Potentiometer 60 einstellbar sind, einem Multiplikator 62 zugeführt, der den am Potentiometer 60 gewählten Aufschlag auf den gemessenen Spaltspannungswert errechnet. Der Ausgang des Multiplikators 62 führt zum Komparator 56, sodaß die Stromquelle 52 ein Steuersignal erhält, das zu einer höheren Ausgangsspannung führt als sie zu einer Stromkonstanz zwischen den Elektroden 10 und 16 erforderlich wäre.

Das ständige oder in Abständen erfolgende Messen der physikalischen Größe läßt sich erfindungsgemäß auch dazu verwenden, den Arbeitsprozess zu beenden, nämlich wenn der Istwert den Sollwert erreicht hat, ohne daß die Menge des Spaltstromes laufend erhöht wird. Insbesondere kann sehr einfach die Spaltspannung kontinuierlich oder feinstufig so erhöht werden, daß der Spaltstrom konstant bleibt. Dann kann die Sollendspannung als Vorgabe verwendet werden, um den Arbeitsprozess zu beenden, wenn der Istwert den Sollendwert erreicht hat. Diese Verfahrensweise hat den Vorteil, daß die Dauer des Arbeitsprozesses nicht zeitlich sondern vom Entgratungs-d.h. Bearbeitungszustand des Werkstückes gesteuert wird.

Natürlich ist diese Verfahrensvariante auch in Verbindung mit dem Gegenstand des erfindungsgemäßen Verfahrens gemäß Anspruch 1 einsetzbar.

## Patentansprüche

1. Verfahren zur Regelung des elektrischen Stromes bei einem elektrochemischen Bearbeitungsprozess, mit einer regelbaren Gleichstromquelle, einem stationären Werkzeug als Anode und einem ebenfalls stationären Werkstück als Kathode, sowie einem dazwischen gebildeten, sich während des Arbeitsprozesses ständig verbreiternden und von einer Elektrolytlösung durchströmten Arbeitsspalt, wobei in einem Probelauf der Arbeitsstromverlauf über die Dauer des Bearbeitungsprozesses bestimmt und in einem Programmspeicher gespeichert wird und der jeweilige Arbeitsstrom aller folgenden Bearbeitungsprozesse an gleichen Werkstücken nach dem im Probelauf erstellten Speicherprogramm geregelt wird, **dadurch gekennzeichnet, daß** die Spannung am Arbeitsspalt während des Bearbeitungsprozesses in der Weise erhöht wird, daß die auf die Arbeitsfläche bezogene Arbeitsstromdichte pro Zeiteinheit während des Bearbeitungsprozesses auf Werte ansteigt, die nicht zu einer Überhitzung der Elektrolytlösung führen und daß zur Bestimmung des Arbeitsstromverlaufes im Probelauf die Änderungen einer physikalischen Größe gemessen und gespeichert werden, die aus der Spannung am Arbeitsspalt oder der Breite des Arbeitsspaltes oder aus dem Druck oder der Temperatur oder der Durchflußmenge der Elektrolytlösung besteht.

2. Verfahren nach Anspruch 1, **dadurch gekennzeichnet, daß** der Arbeitsstrom in Form gepulsten Gleichstroms zugeführt wird, dessen Impulsbreiten pro Zeiteinheit während des Bearbeitungsprozesses vergrößert werden.

3. Verfahren nach Anspruch 1 oder 2, **dadurch gekennzeichnet, daß** der Arbeitsprozess durch Zeitvorgabe beendet wird, jedoch ein Fehlersignal ausgelöst wird, wenn zu diesem Zeitpunkt die Arbeitsspannung einen Sollwert nicht erreicht hat.

4. Verfahren nach einem der Ansprüche 1-3, **dadurch gekennzeichnet, daß** die Ist-Spannung während des Arbeitsprozesses laufend in Richtung auf die programmierte höhere Sollspannung verändert wird und bei Auftreten eines oberhalb der jeweiligen Sollspannung liegenden Ist-Wertes der Arbeitsprozess abgebrochen wird.

5. Verfahren nach einem oder mehreren der Ansprüche 1-4, **dadurch gekennzeichnet, daß** der Arbeitsprozess beendet wird, wenn die kontinuierlich oder in Abständen erhöhte Ist-Spannung am Spalt die Sollendspannung erreicht hat.

## Claims

1. A method of regulating the electrical current in an electrochemical machining process, having a regulable direct-current source, a stationary tool as the anode and a likewise stationary workpiece as the cathode, as well as, formed between them, a working gap which becomes continuously wider during the work process and through which an electrolyte solution flows, where, in a trial operation, the curve of the working current over the duration of the machining process is determined and is stored in a program memory and the respective working current of all the successive machining processes on similar workpieces is regulated in accordance with the stored program generated during the trial operation, characterized in that the voltage at the working gap is increased during the machining process in such a way that the working current density related to the working surface per unit of time increases during the machining process to values which do not result in overheating of the electrolyte solution, and in that to determine the curve of the working current in the trial operation the changes to a physical variable comprising the voltage at the working gap or the width of the working gap or the pressure or the temperature or the throughput quantity of electrolyte solution are measured and stored.

2. A method according to Claim 1, characterized in that the working current is supplied in the form of pulsed direct current whereof the pulse widths per unit of time are increased during the machining process.

3. A method according to Claim 1 or 2, characterized in that the work process is ended by a time setting but an error signal is triggered if the working voltage has not reached a set value at this instant.

4. A method according to one of Claims 1 - 3, characterized in that the actual voltage is continuously altered during the work process towards the programmed higher set voltage and, in the event that an actual value above the respective set voltage occurs, the work process is terminated.

5. A method according to one or more of Claims 1 - 4, characterized in that the work process is ended if the actual voltage at the gap, increased continuously or at intervals, has reached the set final voltage.

## Revendications

1. Procédé pour la régulation du courant électrique au cours d'une opération d'usinage, avec une source de courant continu réglable, un outil stationnaire comme anode et une pièce à usiner, également stationnaire, comme cathode, ainsi qu'un espace de travail formé entre les deux, qui s'élargit constamment pendant l'opération d'usinage et est traversé par une solution d'électrolyte, l'évolution du courant de travail pendant la durée de l'opération d'usinage étant déterminée par un fonctionnement d'essai et mémorisé dans une mémoire à programmes et le courant de travail de toutes les opérations d'usinage suivantes sur des pièces à usiner identiques étant réglé selon le programme mémorisé établi lors du fonctionnement d'essai, caractérisé en ce que la tension à l'espace de travail est augmentée au cours de l'opération d'usinage de telle manière que la densité de courant de travail par unité de temps, par rapport à la surface d'usinage, augmente, pendant l'opération d'usinage, à des valeurs qui ne provoquent pas de surchauffe de la solution d'électrolyte et que, pour déterminer l'évolution du courant de travail, on mesure et mémorise, au cours du fonctionnement d'essai, les variations d'une grandeur physique qui consiste en la tension à l'espace de travail ou la largeur de l'espace de travail ou en la pression ou la température ou le débit de la solution d'électrolyte.

2. Procédé suivant la revendication 1, caractérisé en ce que le courant de travail est alimenté sous forme de courant continu pulsé dont les largeurs d'impulsions par unité de temps sont augmentées pendant l'opération d'usinage.

3. Procédé suivant la revendication 1 ou 2, caractérisé en ce que l'opération d'usinage se termine à l'expiration d'un temps prédéterminé, mais qu'un signal d'erreur est déclenché lorsque, à ce moment, la tension de travail n'a pas atteint une valeur de consigne.

4. Procédé suivant l'une des revendications 1 à 3, caractérisé en ce que la tension réelle est, pendant l'opération d'usinage, constamment modifiée en direction de la tension de consigne supérieure programmée et que l'opération d'usinage est interrompue lorsqu'il se produit une valeur réelle supérieure à la tension de consigne correspondante.

5. Procédé suivant l'une ou plusieurs des revendications 1 à 4, caractérisé en ce que l'opération d'usinage se termine lorsque la tension réelle augmentée en continu ou par intervalles a atteint, à l'espace, la tension de consigne finale.
